# EUROPÄISCHE PATENTANMELDUNG

(11) **EP 2 482 373 A1**
(43) Veröffentlichungstag der Anmeldung: **01.08.2012**
(21) Anmeldenummer: 11152648.9
(22) Anmeldetag: 31.01.2011
(51) Int. Cl.: H01M 8/18, H01M 12/08, H01M 16/00

(54) **Energiespeicher und Verfahren zum Entladen und Laden eines Energiespeichers**

(71) Anmelder: SIEMENS AKTIENGESELLSCHAFT, 80333 München (DE)
(72) Erfinder: Vortmeyer, Nicolas, 91054, Erlangen (DE); Menapace, Wolfgang, 91052, Erlangen (DE); Brunhuber, Christian, 91275, Auerbach (DE)

(57) **Zusammenfassung**

Es wird ein Energiespeicher zur Verfügung gestellt, welcher umfasst:
- einen wiederaufladbaren primären Energiespeicher (1) mit einer Anionen erzeugenden und Anionen leitenden ersten Elektrode (3), einer Anionen aufnehmenden und/oder Anionen leitenden zweiten Elektrode (5), einem zwischen der ersten Elektrode (3) und der zweiten Elektrode (5) angeordneten Anionen leitenden Elektrolyten (7) und einem die zweite Elektrode (5) bildenden oder mit dieser in Kontakt stehenden ersten Redoxpaar, welches ein Oxidationsedukt und ein Oxidationsprodukt umfasst;
- wenigstens ein speicherbares zweites Oxidationsedukt, das einem zweiten Redoxpaar angehört;
- einen sekundären Energiespeicher (13), der als Speicher für das zweite Oxidationsedukt ausgebildet ist; und
- eine Verbindungsleitung (17) zwischen dem primären Energiespeicher (1) und dem sekundären Energiespeicher (13), die ein Leiten des zweiten Oxidationsedukts vom primären Energiespeicher (1) zum sekundären Energiespeicher (13) und zurück ermöglicht.

## Beschreibung

Die vorliegende Erfindung betrifft einen Energiespeicher zum Speichern und Abgeben von elektrischer Energie. Daneben betrifft die Erfindung ein Verfahren zum Entladen und zum Laden eines derartigen Energiespeichers.

Energiespeicher zum Speichern und Abgeben elektrischer Energie sind bspw. für viele mobile Anwendungen von hoher Bedeutung. Während die Speicherkapazität heutiger Energiespeicher zum Speichern elektrischer Energie für den Betrieb kleinerer Geräte wie Mobiltelefone, tragbare Computer, etc. ausreichend ist, sind Energiespeicher zum Speichern elektrischer Energie für größere Anwendungen wie beispielsweise, elektrisch angetriebene Kraftfahrzeuge noch mit Unzulänglichkeiten behaftet, die ihrem kommerziell erfolgreichen Einsatz entgegenstehen. Insbesondere die Speicherkapazität der verwendeten Batterien erfüllt noch nicht die angestrebten Anforderungen. Obwohl beispielsweise Lithiumionenbatterien für die Anwendung etwa in Mobiltelefonen oder Computern gute Ergebnisse erzielen, eignen sie sich für elektrische Kraftfahrzeuge mit ihrem hohen Energiebedarf nur bedingt. Die Speicherkapazität der Lithiumionenbatterien stellt dabei einen begrenzenden Faktor für die Reichweite eines elektrischen Kfz dar. Da die Größe der Batterie im Kraftfahrzeug nicht beliebig gesteigert werden kann, bleibt die Reichweite begrenzt.

Insbesondere im Kfz-Bereich sind außerdem Systeme bekannt, bei denen die für den Antrieb notwendige Energie in Form von Wasserstoff gespeichert wird. Mittels einer Brennstoffzelle wird der Wasserstoff dann in elektrischen Strom umgewandelt, mit welchem der Motor angetrieben werden kann.

Für eine derartige Technologie ist jedoch der Aufbau eines Tankstellennetzes für Wasserstoff notwendig, was die Einführung dieser Technologie, insbesondere im Hinblick auf die wegen der Explosionsgefahr hohen Sicherheitsanforderungen der Tankstellen, teuer macht.

Gegenüber diesem Stand der Technik ist es Aufgabe der vorliegenden Erfindung, einen vorteilhaften Energiespeicher sowie ein vorteilhaftes Verfahren zum Entladen und Laden eines Energiespeichers zur Verfügung zu stellen. Daneben ist es eine Aufgabe der vorliegenden Erfindung, ein vorteilhaftes elektrisches System mit einem elektrischen Verbraucher zur Verfügung zu stellen.

Die erste Aufgabe wird durch einen Energiespeicher nach Anspruch 1 bzw. ein Verfahren zum Entladen und Laden eines Energiespeichers nach Anspruch 12 gelöst. Die zweite Aufgabe wird durch ein elektrisches System nach Anspruch 9 gelöst. Die abhängigen Ansprüche enthalten vorteilhafte Ausgestaltungen der Erfindung.

Ein erfindungsgemäßer Energiespeicher umfasst einen wiederaufladbaren primären Energiespeicher sowie einen sekundären Energiespeicher. Der primäre Energiespeicher weist eine Anionen erzeugende und Anionen leitende erste Elektrode, eine Anionen aufnehmende und/oder Anionen leitende zweite Elektrode sowie einen zwischen der ersten Elektrode und der zweiten Elektrode angeordneten Anionen leitenden, typischerweise als Feststoff ausgebildete Elektrolyten auf. Zudem weist der primäre Energiespeicher ein erstes Redoxpaar auf, das die zweite Elektrode bildet oder mit dieser in Kontakt steht und das ein Oxidationsedukt und ein Oxidationsprodukt umfasst. Der erfindungsgemäße Energiespeicher umfasst darüber hinaus wenigstens ein speicherbares zweites Oxidationsedukt, das einem zweiten Redoxpaar angehört. Der sekundäre Energiespeicher ist als Speicher für das zweite Oxidationsedukt ausgebildet. Zwischen dem primären Energiespeicher und dem sekundären Energiespeicher ist eine Verbindungsleitung vorhanden, um ein Leiten des zweiten Oxidationsedukts vom primären Energiespeicher zum sekundären Energiespeicher und zurück zu ermöglichen. Als erstes Redoxpaar kann hierbei beispielsweise ein Metall und sein Oxid oder zwei unterschiedliche Oxidationsstufen eines Metalls Verwendung finden.

Das zweite Oxidationsedukt kann insbesondere gasförmig sein. Ein geeignetes zweites Oxidationsedukt ist beispielsweise Wasserstoff. Mittels eines zwischen dem primären Energiespeicher und dem sekundären Energiespeicher vorhandenen Verdichters zum Verdichten des sekundären Oxidationsedukts kann eine besonders hohe Speicherkapazität für das gasförmige Oxidationsedukt im zweiten Energiespeicher erreicht werden. Zum Speichern eines gasförmigen zweiten Oxidationsedukts kann insbesondere ein Hochdruck-Gasspeicher oder ein Metallhydridspeicher vorhanden sein.

Erfindungsgemäß wird also eine wiederaufladbare Batterie, die in ihrem Aufbau einer Brennstoffzelle, insbesondere einer Festoxidbrennstoffzelle (englisch: solid oxide fuel cell, SOFC) entspricht, in einem zusätzlich vorhandenen Betriebsmodus als Brennstoffzelle oder Elektrolyseur für ein Redoxpaar wie beispielsweise H₂O/H₂ betrieben. In der Batterie wird elektrische Energie in Form eines typischerweise festen, manchmal aber auch flüssigen Redoxpaares gespeichert, wobei das Redoxpaar im voll geladenen Zustand lediglich den reduzierten Anteil, also das Oxidationsedukt, aufweist und im entladenen Zustand den oxidierten Teil, also das Oxidationsprodukt, aufweist. Um Energie abzugeben, wird das Oxidationsedukt beispielsweise mittels Luftsauerstoff oxidiert, wobei der Luftsauerstoff von der ersten Elektrode ionisiert wird, die Sauerstoffionen über die erste Elektrode zum für die Sauerstoffionen durchlässigen Elektrolyten geleitet wird und nach dem Durchtritt durch den Elektrolyten das Oxidationsedukt oxidiert.

Das Oxidationsedukt kann dabei entweder das Material der zweiten Elektrode selbst oder ein mit dieser Elektrode in Kontakt stehendes Material sein. Im letzteren Fall leitet die zweite Elektrode Anionen. Es sei an dieser Stelle angemerkt, dass die Verwendung des Luftsauerstoffs zur Oxidation lediglich als anschauliches Beispiel gewählt ist und dass statt Sauerstoffionen grundsätzlich auch andere Anionen herangezogen werden können.

Wenn nun das Oxidationsedukt des ersten Redoxpaares vollständig oxidiert ist und daher kein Stromfluss auf der Basis einer weiteren Oxidation dieses Redoxpaares mehr möglich ist, kann im zusätzlichen Betriebsmodus der zweiten Elektrode das Oxidationsedukt eines zweiten Oxidationspaares, beispielsweise Wasserstoff, zugeführt werden, wobei die Batterie dann als Brennstoffzelle arbeitet. An der zweiten Elektrode erfolgt dann eine Oxidation des zweiten Oxidationsedukts unter Abgabe von Elektronen, die über einen Stromkreis an die erste Elektrode zurückgeleitet werden. Auf diese Weise kann die Stromabgabe des Energiespeichers so lange verlängert werden, bis das zweite Oxidationsedukt aufgebraucht ist.

Zum Laden des Energiespeichers bzw. Wiederaufladen des Energiespeichers werden die erste und die zweite Elektrode an eine Stromquelle angeschlossen, wobei die Polarität so gewählt ist, dass das Material des ersten Redoxpaares aufgrund der Stromzufuhr reduziert wird. Nachdem das Material des ersten Redoxpaares vollständig reduziert ist und somit der primäre Energiespeicher wiederaufgeladen ist, kann im zusätzlichen Betriebsmodus der zweiten Elektrode ein Oxidationsprodukt des zweiten Redoxpaares zugeführt und die Batterie als Elektrolyseur betrieben werden. Bei Verwendung von Wasserstoff als zweites Oxidationsedukt kann als Oxidationsprodukt beispielsweise Wasserdampf zugeführt werden.

Aufgrund des Stromflusses durch die Elektroden erfolgt eine Elektrolyse des Oxidationsprodukts des zweiten Redoxpaares, sodass das Oxidationsedukt des zweiten Redoxpaares entsteht, welches dann im zweiten Energiespeicher gespeichert werden kann.

Das beim Entladen des Energiespeichers entstehende Oxidationsprodukt des zweiten Redoxpaares muss nicht notwendigerweise mit dem beim Laden Verwendung findenden Oxidationsprodukt des zweiten Redoxpaares identisch sein. Beispielsweise kann das beim Entladen entstehende Oxidationsprodukt des zweiten Redoxpaares an die Umgebung abgeführt werden. Hierzu kann der Energiespeicher einen Ausgang zur Abfuhr des Oxidationsproduktes des zweiten Redoxpaares aufweisen. Wenn das Oxidationsprodukt des zweiten Redoxpaares, das beim Entladen entsteht, an die Umgebung abgeführt wird, ist zum Laden des Energiespeichers ein Oxidationsprodukt des zweiten Redoxpaares neu zuzuführen. Hierzu kann der Energiespeicher einen Eingang zur Zufuhr eines Oxidationsprodukts des zweiten Redoxpaares aufweisen. Der Ausgang zur Abfuhr des beim Entladen entstehenden Oxidationsprodukts des zweiten Redoxpaares und der Eingang zum Einführen des Oxidationsprodukts des zweiten Redoxpaares beim Aufladen des Energiespeichers können insbesondere identisch sein. Die Ausgestaltung, in der das beim Entladen entstehende Oxidationsprodukt des zweiten Redoxpaares an die Umgebung abgeführt wird, eignet sich insbesondere, wenn das Oxidationsprodukt umweltverträglich und ohne großen Aufwand zu beschaffen ist. Dies ist etwa der Fall, wenn als Oxidationsedukt Wasserstoff Verwendung findet. Wenn dann zum Oxidieren beispielsweise Luftsauerstoff Verwendung findet, entsteht als Oxidationsprodukt Wasserdampf, der ohne Schädigung der Umwelt abgeführt werden kann. Wasserdampf zum Einbringen in den Energiespeicher beim Aufladen ist zudem ohne großen Aufwand erhältlich.

Insbesondere wenn das beim Entladen des Energiespeichers entstehende Oxidationsprodukt nicht ohne weiteres umweltverträglich ist oder das Oxidationsprodukt beim Aufladen des Energiespeichers nur mit hohem Aufwand zu beschaffen ist, ist es vorteilhaft, wenn der Energiespeicher einen Sammelbehälter zum Sammeln des Oxidationsproduktes des zweiten Redoxpaares sowie eine Verbindungsleitung zwischen dem primären Energiespeicher und dem Sammelbehälter, die ein Leiten des zweiten Oxidationsprodukts vom primären Energiespeicher zum Sammelbehälter ermöglicht, umfasst. Das im Sammelbehälter gesammelte Oxidationsprodukt kann dann beim Aufladen des Energiespeichers wiederverwendet werden.

Ein erfindungsgemäßes elektrisches System mit einem elektrischen Verbraucher ist mit wenigstens einem erfindungsgemäßen Energiespeicher ausgestattet. Der Verbraucher kann insbesondere ein elektrisch betriebenes Gerät, etwa ein Elektromotor, sein. Außerdem ist es vorteilhaft, wenn der Energiespeicher auswechselbar ausgestaltet ist, da dann ein Stillstand des elektrischen Verbrauches während der für das Laden des Energiespeichers nötigen Ladezeit vermieden werden kann.

Die Verwendung eines erfindungsgemäßen Energiespeichers ermöglicht dem System auf einen Energiespeicher mit hoher Ladekapazität zurückzugreifen und erlaubt somit eine verlängerte Laufzeit des elektrischen Geräts ohne Wiederaufladen des Energiespeichers.

Im erfindungsgemäßen Verfahren zum Entladen und Laden eines erfindungsgemäßen Energiespeichers wird beim Entladen zuerst der primäre Energiespeicher unter Abgabe elektrischer Energie entladen, indem das erste Oxidationsedukt zum ersten Oxidationsprodukt oxidiert wird. Danach wird dem primären Energiespeicher zur weiteren Abgabe elektrische Energie das zweite Oxidationsedukt aus dem sekundären Energiespeicher zugeführt. Dieses wird dann an der zweiten Elektrode zum Oxidationsprodukt des zweiten Redoxpaares oxidiert. Beim Laden des Energiespeichers wird zuerst der primäre Energiespeicher unter Aufnahme elektrischer Energie geladen, indem das erste Oxidationsprodukt des ersten Redoxpaares zum ersten Oxidationsedukt reduziert wird. Danach wird dem primären Energiespeicher unter weiterer Aufnahme elektrischer Energie ein Oxidationsprodukt des zweiten Redoxpaares zugeführt, welches an der zweiten Elektrode zum zweiten Oxidationsedukt reduziert wird. Das an der zweiten Elektrode entstehende Oxidationsedukt wird zur Speicherung in den sekundären Energiespeicher geleitet. Dadurch, dass nach dem Aufladen des primären Energiespeichers dieser als Elektrolyseur betrieben wird, lässt sich die Ladekapazität des Energiespeichers erhöhen. Ebenso kann durch den Betrieb als Brennstoffzelle nach dem Entladen des ersten Energiespeichers die Dauer der Stromabgabe verlängert werden.

Um die Speicherkapazität des sekundären Energiespeichers bei gegebenem Volumen zu erhöhen, kann im Fall eines gasförmigen zweiten Oxidationsedukts eine Verdichtung des zweiten Oxidationsedukts vor dem Speichern im sekundären Energiespeicher erfolgen.

Das beim Entladen des Energiespeichers entstehende Oxidationsprodukt des zweiten Redoxpaares kann entweder an die Umgebung abgegeben werden oder in einen Sammelbehälter geleitet und dort gesammelt werden. Letzteres ist insbesondere dann vorteilhaft, wenn das beim Entladen des Energiespeichers entstehende Oxidationsprodukt nicht umweltfreundlich ist oder ein Oxidationsprodukt für das Laden des Energiespeichers nicht ohne größeren Aufwand zur Verfügung gestellt werden kann. Das im Sammelbehälter gesammelte Oxidationsprodukt steht dann zur Wiederverwendung beim Aufladen zur Verfügung. Weitere Merkmale, Eigenschaften und Vorteile der vorliegenden Erfindung ergeben sich aus der nachfolgenden Beschreibung von Ausführungsbeispielen unter Bezugnahme auf die beiliegenden

Figuren.
- Figur 1: zeigt ein Beispiel für einen primären Energiespeicher des erfindungsgemäßen Energiespeichers.
- Figur 2: zeigt stark schematisiert einen erfindungsgemäßen Energiespeicher.
- Figur 3: zeigt den Energiespeicher aus Figur 2 in einen ersten Entladungsmodus.
- Figur 4: zeigt den Energiespeicher aus Figur 2 in einem zweiten Entladungsmodus.
- Figur 5: zeigt den Energiespeicher aus Figur 2 in einem ersten Aufladungsmodus.
- Figur 6: zeigt den Energiespeicher aus Figur 2 in einem zweiten Aufladungsmodus.

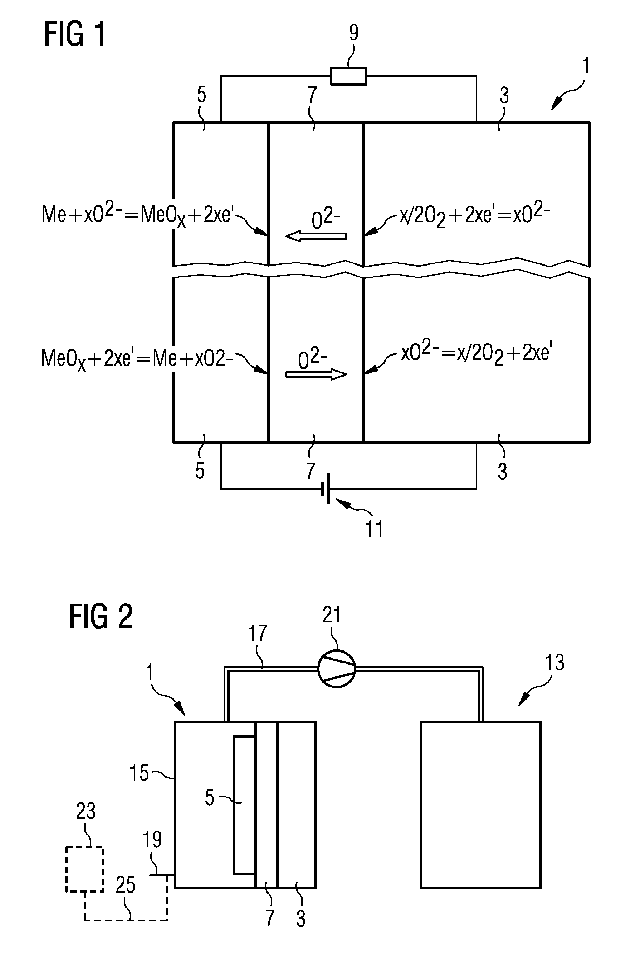

Nachfolgend wird die vorliegende Erfindung anhand eines in den Figuren 1 bis 6 stark schematisiert dargestellten Ausführungsbeispiels näher erläutert. Dabei erfolgt zuerst anhand von Figur 1 eine Erläuterung des primären Energiespeichers und seiner Funktionsweise. Anhand der Figuren 2 bis 6 wird dann der Aufbau des erfindungsgemäßen Energiespeichers sowie seine Funktionsweise erläutert.

Der primäre Energiespeicher eines erfindungsgemäßen Energiespeichers ist stark schematisiert in Figur 1 dargestellt. Im Rahmen des Ausführungsbeispiels wird ein primärer Energiespeicher beschrieben, der mit einem Metall und einem Metalloxid als erstem Redoxpaar ausgestattet ist und bei dem die Oxidation mit Hilfe von Luftsauerstoff durchgeführt wird. Es sei an dieser Stelle aber darauf hingewiesen, dass das erste Redoxpaar nicht notwendigerweise ein Metall und ein Metalloxid umfassen muss, sondern beispielsweise zwei Metalloxide mit unterschiedlichen Oxidationsstufen oder ein nichtmetallisches Oxidationsedukt umfassen kann. Ebenso braucht das Oxidationsmittel nicht notwendigerweise Luftsauerstoff zu sein. Auch andere Anionen bildende Gase oder Flüssigkeiten können zur Oxidation herangezogen werden. Statt zweifach negativ geladener Sauerstoffionen erfolgt die Oxidation dann anhand eines anderen einfach oder mehrfach negativ geladenen Ions, beispielsweise CO₃²⁻ oder PO₄³⁻. Zudem können auch andere Anionen bildende Elemente oder Verbindungen, etwa Fluor oder Chlor sowie Fluor- oder Chlorverbindungen, zur Oxidation herangezogen werden. Allerdings ist Luftsauerstoff als Oxidationsmittel besonders geeignet, da er überall reichlich vorhanden ist und die Umwelt nicht belastet.

Im vorliegenden Ausführungsbeispiel umfasst der primäre Energiespeicher 1 eine erste Elektrode 3, die so angeordnet ist, dass Luft an ihr vorbeigeleitet werden kann. Sie ist aus einem aus Sauerstoff transportierenden Material (Oxygen Transporting Material, kurz OTM) hergestellt, welches aus dem Luftsauerstoff Sauerstoffionen O²⁻ erzeugt und zudem in der Lage ist, die Sauerstoffionen zu leiten. Geeignete Materialien für die erste Elektrode 3, im Folgenden Luftelektrode genannt, sind beispielsweise Perovskite (ABO₃) oder Zirkoniumoxid, welches mit Skandiumoxid oder Yttriumoxid dotiert ist (ScSZ und YSZ) sowie Kombinationen daraus.

Der primäre Energiespeicher umfasst eine zweite Elektrode, welche die Sauerstoffionen aufnimmt und/oder leitet und die im vorliegenden Ausführungsbeispiel aus einem Metall, etwa Eisen, besteht, welches von den Sauerstoffionen oxidiert wird. Alternativ kann die zweite Elektrode 5 auch aus einem Sauerstoffionen leitenden Material wie etwa Perovskit bestehen, das einen schwamm- oder gerüstartigen Aufbau hat. In diesem Fall kann ein flüssiges Redoxpaar Verwendung finden, in das die zweite Elektrode eingetaucht ist. Da die zweite Elektrode im vorliegenden Ausführungsbeispiel aus einem von einem Metall und einem Metalloxid gebildeten Redoxpaar gebildet ist, wobei sie je nach Ladezustand des primären Energiespeichers aus Metall, Metalloxid oder einem Gemisch von beiden besteht, wird sie im Folgenden Metallelektrode 5 genannt.

Zwischen der Luftelektrode 3 und der Metallelektrode 5 ist eine Elektrolytschicht 7 angeordnet, die im vorliegenden Ausführungsbeispiel eine Sauerstoffionen transportierende Keramikmembran ist. Sie kann beispielsweise aus einer einzelnen Phase von Zirkoniumoxid hergestellt sein, das mit Skandiumoxid oder Yttriumoxid stabilisiert ist. Alternativ können auch Mischungen aus Yttriumoxid, welches mit Zirkoniumoxid dotiert ist, und Yttriumoxid, welches mit Skandiumoxid dotiert ist, zur Anwendung kommen.

Beim Entladen des primären Energiespeichers werden aus der an der Luftelektrode 3 vorbeigeleiteten Luft Sauerstoffionen O²⁻ gebildet, wobei vom Sauerstoff zur Anionenbildung Elektronen aus dem Material der Luftelektrode aufgenommen werden. Die entstandenen Sauerstoffionen wandern durch die Elektrolytschicht 7 zur Metallelektrode 5, wo sie unter Abgabe von Elektronen das Metall oxidieren. Der dabei in der Metallelektrode entstehende Elektronenüberschuss wird unter Zwischenschaltung eines elektrischen Verbrauchers 9 an die Luftelektrode 3 geleitet. Die beim Entladevorgang ablaufenden Reaktionen sind in Fig. 1 in der oberen Hälfte dargestellt.

Der Aufladevorgang und die dabei ablaufenden Reaktionen sind in der unteren Hälfte von Figur 1 dargestellt. Zum Laden des primären Energiespeichers wird statt eines elektrischen Verbrauchers eine Stromquelle 11 an die Elektroden 3, 5 angeschlossen, wobei der negative Pol mit der Metallelektrode und der positive Pol mit der Luftelektrode verbunden wird. Durch die zur Metallelektrode fließenden Elektronen wird das Metalloxid reduziert, wobei Sauerstoffionen frei werden, die durch die Elektrolytschicht 7 zur Luftelektrode 3 wandern. In der Luftelektrode 3, die mit dem positiven Pol der Energiequelle 11 verbunden ist, werden die Elektronen von den Sauerstoffionen abgegeben, sodass sich molekularer Sauerstoff bildet, der von der Luftelektrode 3 an die Umgebung abgegeben wird. Wenn das Metalloxid der Metallelektrode 5 vollständig zu Metall reduziert ist, ist ein weiteres Aufladen des primären Energiespeichers nicht möglich.

Um den erfindungsgemäßen Energiespeicher auch dann weiter laden zu können, wenn das Metalloxid vollständig reduziert ist, umfasst der Energiespeicher einen sekundären Energiespeicher 13, der über eine Gasleitung 17 mit einem Gehäuse 15, welches die Metallelektrode 5 umschließt, in Verbindung steht (vgl. Figur 2). Außerdem weist das Gehäuse 15 einen Eingang/Ausgang 19 auf, über den ein Gas oder Dampf in das Innere des Gehäuses 15 ein- oder aus dem Inneren des Gehäuses 15 abgeführt werden kann. Zum weiteren Laden des erfindungsgemäßen Energiespeichers kommt ein zweites, typischerweise gasförmiges Redoxpaar zur Anwendung. Im vorliegenden Ausführungsbeispiel ist dieses zweite Redoxpaar aus Wasserstoff und Wasserdampf gebildet. Es kommen aber auch andere Redoxpaare, insbesondere gasförmige Redoxpaare in Frage. Jedoch sind auch flüssige Redoxpaare nicht grundsätzlich ausgeschlossen.

Im vorliegenden Ausführungsbeispiel wird zum weiteren Aufladen des erfindungsgemäßen Energiespeichers Wasserdampf durch den Eingang/Ausgang 19 in den Innenraum des Gehäuses 15 eingeleitet. Gleichzeitig bleibt der primäre Energiespeicher an die Stromquelle angeschlossen, wie dies in der unteren Hälfte von Figur 1 dargestellt ist. Statt einer weiteren Reduktion des Metalls erfolgt nunmehr eine Reduktion des in den Innenraum des Gehäuses 15 eingebrachten Wasserdampfes zu Wasserstoff, welcher mittels eines in der Gasleitung 17 angeordneten Verdichters 21 in den sekundären Energiespeicher 13, der im vorliegenden Ausführungsbeispiel als Hochdruck-Gasspeicher ausgebildet ist, eingebracht wird. Die beim Reduzieren des Wasserdampfs entstehenden Sauerstoffionen werden wiederum über die Elektrolytschicht 7 an die Luftelektrode 3 weitergeleitet und dort in molekularen Sauerstoff umgewandelt, der an die Umgebung abgegeben wird. Zum weiteren Aufladen des erfindungsgemäßen Energiespeichers wird der primäre Energiespeicher also als Elektrolyseur zur Elektrolyse von Wasserdampf verwendet. Die Elektrolyse und das Speichern des Wasserstoffs kann so lange erfolgen, bis der sekundäre Energiespeicher 13 vollständig mit Wasserstoff gefüllt ist. Erst dann ist der erfindungsgemäße Energiespeicher vollständig aufgeladen.

Obwohl im vorliegenden Ausführungsbeispiel ein Hochdruck-Gasspeicher zum Speichern des Wasserstoffs Verwendung findet, sind auch andere Ausgestaltungen möglich. Beispielsweise kann der sekundäre Energiespeicher als Metallhydridspeicher ausgebildet sein. Ebenso braucht das zweite Redoxpaar nicht von Wasserdampf und Wasserstoff gebildet zu sein. So kann der Wasserstoff beispielsweise durch Methan ersetzt werden. Ebenso kann der Wasserdampf durch eine andere Komponente ersetzt werden, beispielsweise durch Fluorwasserstoff. Die Verwendung von Wasserdampf als einer Komponente des Redoxpaares ist jedoch unter Umweltgesichtspunkten vorteilhaft. Außerdem kann sich das zum Laden verwendete Oxidationsprodukt von dem beim Entladen entstehenden Oxidationsprodukt unterscheiden. Ein Redoxpaar im Sinn der vorliegenden Erfindung kann daher auch mehr als ein Oxidationsprodukt umfassen.

Es ist jedoch vorteilhaft, wenn beide Oxidationsprodukte identisch sind, da sich dann ein vollständiger Materialkreislauf realisieren lässt.

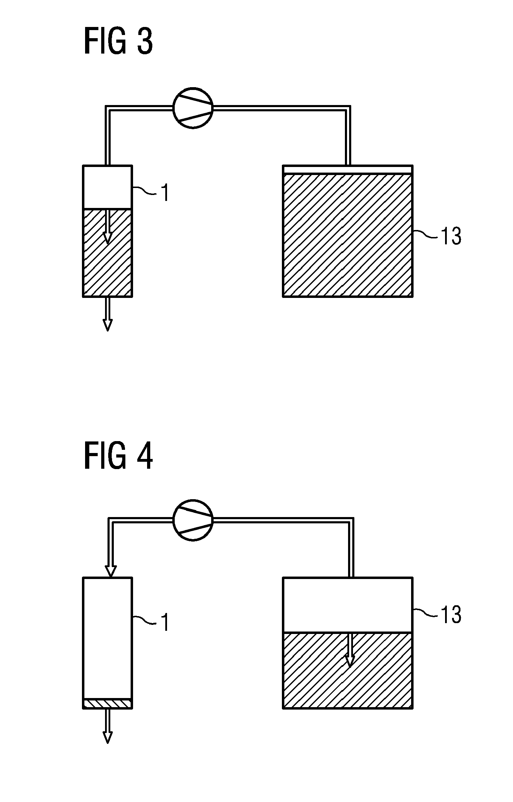

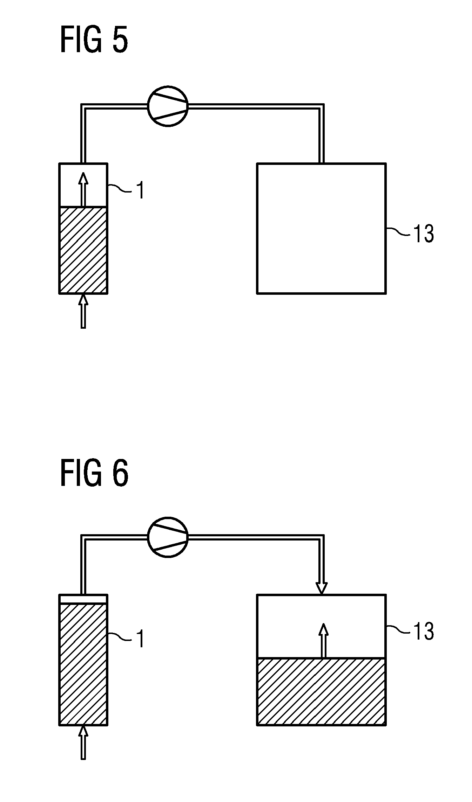

Das Entladen eines vollständig geladenen erfindungsgemäßen Energiespeichers ist in den Figuren 3 und 4 dargestellt, das vollständige Wiederaufladen des Energiespeichers in den Figuren 5 und 6. Beim Entladen des erfindungsgemäßen Energiespeichers, also beim Verbrauch von elektrischer Energie durch einen an die Elektroden 3, 5 des primären Energiespeichers 1 angeschlossenen Verbraucher 9, wird zuerst der primäre Energiespeicher durch Oxidieren der Metallelektrode 5 entladen. Dieser Entladungsmodus ist in Figur 3 dargestellt.

Wenn der primäre Energiespeicher 1 entladen ist, wird dem Innenraum des Gehäuses 15 Wasserstoff aus dem sekundären Energiespeicher 13 zugeführt, welcher durch die in der Luftelektrode 3 gewonnenen Sauerstoffionen an der nunmehr oxidierten Metallelektrode 5 zu Wasserdampf oxidiert wird. Der Wasserdampf wird schließlich über den Eingang/Ausgang 19 an die Umgebung abgegeben. Dieser Entladungsmodus, der in Figur 4 schematisch dargestellt ist, kann so lange fortgeführt werden, bis der sekundäre Energiespeicher 13 keinen Wasserstoff mehr abgeben kann.

Zum Aufladen des erfindungsgemäßen Energiespeichers wird statt des Verbrauchers 9 eine Stromquelle 11 an den primären Energiespeicher 1 angeschlossen, wie dies in der unteren Hälfte von Figur 1 dargestellt ist. Mit Hilfe dieser Stromquelle wird das Metalloxid der Metallelektrode 5 zu Metall reduziert. Dieser Aufladungsmodus ist in Figur 5 dargestellt. Wenn ein weiteres Reduzieren der Metallelektrode 5 nicht möglich ist, wird über den Eingang/Ausgang 19 Wasserdampf in den Innenraum des Gehäuses 15 eingedüst und so lange zu Wasserstoff reduziert, bis der sekundäre Energiespeicher 13 vollständig gefüllt ist. Dieser Aufladungsmodus ist in Figur 6 dargestellt.

Zusätzlich zu den bereits beschriebenen Abwandlungen des Ausführungsbeispiels sind weitere Abwandlungen möglich. So kann zum Beispiel ein Sammelbehälter 23, der über eine Verbindungsleitung 25 mit dem Innenraum des Gehäuses 15 verbunden ist (in Figur 2 gestrichelt dargestellt) für den beim Entladen des sekundären Speichers entstehenden Wasserdampf vorhanden sein, in dem der Wasserdampf gesammelt wird, sodass er beim Aufladen des sekundären Energiespeichers wieder verwendet werden kann. Diese Ausgestaltung ist insbesondere dann vorteilhaft, wenn das zweite Redoxpaar keinen Wasserdampf als Oxidationsprodukt enthält, sondern ein Oxidationsprodukt, welches nicht an die Umwelt abgegeben werden soll, sei es, weil es umweltschädigend ist oder weil es zum Wiederaufladen des sekundären Energiespeichers nicht ohne weiteres zu beschaffen ist.

Der erfindungsgemäße Energiespeicher eignet sich beispielsweise für mobile Anwendungen, hierbei insbesondere für elektrisch betriebene Kfz. In diesem Fall ist der in Figur 1 dargestellte Verbraucher 9 ein Elektromotor. Aber auch andere mobile oder nicht mobile elektrische Systeme, die einen elektrischen Verbraucher wie beispielsweise einen Elektromotor oder andere elektrisch betriebene Geräte aufweisen, können zur Energieversorgung einen erfindungsgemäßen Energiespeicher besitzen. Denkbar sind beispielsweise mobile medizinische Geräte oder Lampen.

Zudem ist es möglich, den Energiespeicher austauschbar zu gestalten, sodass ein vollständig entladener Energiespeicher gegen einen neuen, geladenen Energiespeicher ausgetauscht werden kann. Auf diese Weise können Stillstandszeiten während des Ladens des Energiespeichers vermieden werden. Alternativ besteht die Möglichkeit, dass ein derartiges elektrisches System mehr als einen erfindungsgemäßen Energiespeicher, insbesondere zwei Energiespeicher aufweist.

Dann kann der eine Energiespeicher aufgeladen werden, während der andere Energiespeicher den elektrischen Verbraucher mit Strom versorgt. Die Ausführungsvariante mit wenigstens zwei Energiespeichern ist insbesondere bei stationären elektrischen Systemen sinnvoll, wohingegen die Variante mit einem austauschbaren erfindungsgemäßen Energiespeicher bei mobilen Anwendungen vorteilhaft ist.

## Patentansprüche

1. Energiespeicher, umfassend:
- einen wiederaufladbaren primären Energiespeicher (1) mit einer Anionen erzeugenden und Anionen leitenden ersten Elektrode (3), einer Anionen aufnehmenden und/oder Anionen leitenden zweiten Elektrode (5), einem zwischen der ersten Elektrode (3) und der zweiten Elektrode (5) angeordneten Anionen leitenden Elektrolyten (7) und einem die zweite Elektrode (5) bildenden oder mit dieser in Kontakt stehenden ersten Redoxpaar, welches ein Oxidationsedukt und ein Oxidationsprodukt umfasst;
- wenigstens ein speicherbares zweites Oxidationsedukt, das einem zweiten Redoxpaar angehört;
- einen sekundären Energiespeicher (13), der als Speicher für das zweite Oxidationsedukt ausgebildet ist; und
- eine Verbindungsleitung (17) zwischen dem primären Energiespeicher (1) und dem sekundären Energiespeicher (13), die ein Leiten des zweiten Oxidationsedukts vom primären Energiespeicher (1) zum sekundären Energiespeicher (13) und zurück ermöglicht.

2. Energiespeicher nach Anspruch 1, **dadurch gekennzeichnet, dass** er einen Ausgang (19) zur Abfuhr des Oxidationsprodukts des zweiten Redoxpaares und/oder einen Eingang (19) zur Zufuhr eines Oxidationsprodukts des zweiten Redoxpaares aufweist.

3. Energiespeicher nach Anspruch 1 oder 2, **dadurch gekennzeichnet, dass** er einen Sammelbehälter (23) zum Sammeln des Oxidationsprodukts des zweiten Redoxpaares sowie eine Verbindungsleitung (25) zwischen dem primären Energiespeicher (1) und dem Sammelbehälter (23) umfasst, die ein Leiten des zweiten Oxidationsprodukts vom primären Energiespeicher (1) zum Sammelbehälter (23) ermöglicht.

4. Energiespeicher nach einem der Ansprüche 1 bis 3, in dem das erste Redoxpaar ein Metall und sein Oxid oder zwei unterschiedliche Oxidationsstufen eines Metalls umfasst.

5. Energiespeicher nach einem der Ansprüche 1 bis 4, in dem das zweite Oxidationsedukt gasförmig ist.

6. Energiespeicher nach Anspruch 5, in dem das zweite Oxidationsedukt Wasserstoff ist.

7. Energiespeicher nach Anspruch 5 oder Anspruch 6, in dem zwischen dem primären Energiespeicher (1) und dem sekundären Energiespeicher (13) ein Verdichter (21) zum Verdichten des sekundären Oxidationsedukts vorhanden ist.

8. Energiespeicher nach einem der Ansprüche 5 bis 7, in dem der sekundäre Energiespeicher (13) ein Hochdruck-Gasspeicher oder ein Metallhydridspeicher ist.

9. Elektrisches System mit einem elektrischen Verbraucher (9) und wenigstens einem Energiespeicher nach einem der Ansprüche 1 bis 8.

10. Elektrisches System nach Anspruch 9, in dem der elektrische Verbraucher (9) ein Elektromotor ist.

11. Elektrisches System nach Anspruch 9 oder Anspruch 10, bei dem der Energiespeicher auswechselbar ist.

12. Verfahren zum Entladen und Laden eines Energiespeichers nach einem der Ansprüche 1 bis 8, in dem
- beim Entladen zuerst der primäre Energiespeicher (1) unter Abgabe elektrischer Energie entladen wird, indem das erste Oxidationsedukt zum ersten Oxidationsprodukt oxidiert wird, und danach dem primären Energiespeicher (1) zur weiteren Abgabe elektrischer Energie das zweite Oxidationsedukt aus dem sekundären Energiespeicher (13) zugeführt und an der zweiten Elektrode (5) zum Oxidationsprodukt des zweiten Redoxpaares oxidiert wird, und
- beim Laden zuerst der primäre Energiespeicher (1) unter Aufnahme elektrischer Energie geladen wird, indem das erste Oxidationsprodukt des ersten Redoxpaares zum ersten Oxidationsedukt reduziert wird, und danach dem primären Energiespeicher (1) unter weiterer Aufnahme elektrischer Energie ein Oxidationsprodukt des zweiten Redoxpaares zugeführt wird, welches an der zweiten Elektrode (5) zum zweiten Oxidationsedukt reduziert wird, und das an der zweiten Elektrode (5) entstehende Oxidationsedukt zur Speicherung in den sekundären Energiespeicher (13) geleitet wird.

13. Verfahren nach Anspruch 12, in dem ein gasförmiges zweites Oxidationsedukt Verwendung findet und das zweite Oxidationsedukt vor dem Speichern im sekundären Energiespeicher (13) verdichtet wird.

14. Verfahren nach Anspruch 12 oder Anspruch 13, bei dem das beim Entladen entstehende Oxidationsprodukt des zweiten Redoxopaares an die Umgebung abgegeben wird.

15. Verfahren nach Anspruch 12 oder Anspruch 13, bei dem das beim Entladen entstehende Oxidationsprodukt des zweiten Redoxopaares in einen Sammelbehälter (23) geleitet und dort gesammelt wird.
